# EUROPÄISCHE PATENTSCHRIFT

(11) **EP 3 302 927 B1**
(45) Veröffentlichungstag und Bekanntmachung des Hinweises auf die Patenterteilung: **30.06.2021**
(21) Anmeldenummer: 16727991.8
(22) Anmeldetag: 02.06.2016
(51) Int. Cl.: B29C 48/355, B29C 48/10, B29C 48/25, B29C 55/28

(54) **FÜHRUNGSEINRICHTUNG UND VERFAHREN ZUM FÜHREN EINER KUNSTSTOFFFOLIE**
GUIDING DEVICE AND METHODS FOR GUIDING A PLASTIC FILM
DISPOSITIF DE GUIDAGE, PROCÉDÉ PERMETTANT DE GUIDER UNE FEUILLE DE PLASTIQUE

(30) Priorität: 03.06.2015 DE 102015210318
(43) Veröffentlichungstag der Anmeldung: 11.04.2018
(73) Patentinhaber: Windmöller & Hölscher KG, 49525 Lengerich (DE)
(72) Erfinder: HASELMANN, Simon, 49525 Lengerich (DE); LINKIES, Jürgen, 49525 Lengerich (DE); GOLDENSTEIN, Jens, 49525 Lengerich (DE); BUSSMANN, Markus, 49525 Lengerich (DE)
(86) Internationale Anmeldenummer: PCT/EP2016/062572
(87) Internationale Veröffentlichungsnummer: WO 2016/193400

(56) Entgegenhaltungen:
- WO-A1-2012/032128
- DE-A1-102005 051 874
- JP-U- S58 164 722
- US-A- 3 663 134
- US-A- 3 810 725

## Beschreibung

Die Erfindung betrifft eine Führungseinrichtung zum Führen einer Kunststofffolie nach den Oberbegriffen der Ansprüche 1 eine Blasfolienanlage nach dem Oberbegriff des Anspruchs 15 sowie ein Verfahren nach dem Oberbegriff des Anspruchs 16.

In vielen Bereichen ist es notwendig, eine Folie zu führen. In Vorrichtungen zur Herstellung von Kunststofffolien ergibt sich das besondere Problem, dass diese Folien, wenn sie noch nicht ausreichend erkaltet sind, sehr anfällig für Beschädigung sind, wie etwa so genannte Markierungen. Markierungen sind Streifen oder Punkte mit vom Normalzustand verschiedener Transparenz und anderen Eigenschaften. Derart beschädigte Folien sind häufig nicht mehr für den vorgesehenen Zweck brauchbar.

Die genannte Vorrichtung zur Herstellung von Kunststofffolien ist beispielsweise eine Blasfolienextrusionsanlage, in der zunächst wenigstens ein Kunststoffgranulat aufgeschmolzen wird. Die entstandene Schmelze wird sodann im Extrusionswerkzeug ringförmig verteilt, bevor sie dann durch eine Ringdüse des Extrusionswerkzeugs nach außen gedrückt wird. Der so entstandene Kunststofffolienschlauch wird dann mit einem Abzug abgezogen. Zwischen Ringdüse und Abzug sind in der Regel eine Kalibriereinrichtung und/oder eine Flachlegeeinrichtung angeordnet. Diese Kalibriereinrichtung und/oder Flachlegeeinrichtung sind Führungseinrichtungen im Sinne der Erfindung.

Gerade im Bereich der Kalibriereinrichtung sind solche Kunststofffolien in der Regel noch nicht ausreichend abgekühlt, denn die die Folie umgebende Luft kann oft, selbst wenn sie kalt ist, nicht ausreichend Wärme von der Folie abtransportieren. Daher ist besondere Aufmerksamkeit auf den Kalibrierkorb zu richten.

In jüngerer Vergangenheit wurden Führungseinrichtungen daher derart ausgestattet, dass die Folien mittels eines Luftpolsters führbar sind. Damit wird eine Berührung der Folie mit Teilen dieser Führungseinrichtung effektiv vermieden. Dies hat auch Vorteile, wenn klebrige Folien produziert werden.

Die EP 1 722 956 A1 offenbart eine solche Führungseinrichtung, die mehrere Bläserelemente umfasst, aus denen Luft ausströmen kann, welche die Folie auf Distanz zum Bläserelement hält. Dabei besteht ein solches Bläserelement aus zumindest einem Trägerelement und zumindest einem folienführenden Element. Dieses folienführende Element umfasst zumindest teilweise ein poröses, vorzugsweise mikroporöses Material. Das in der besagten Schrift offenbarte Bläserelement offenbart weiterhin, dass das Trägerelement und das folienführende Element fest miteinander verbunden sind.

Das Patent US 3 810 725 offenbart eine Vorrichtung zum Kühlen einer Kunststofffolie, wobei die Vorrichtung ein Trägerelement und ein Kühlelement umfasst. Diese Vorrichtung eignet sich zum Kühlen der Kunststofffolie, jedoch nicht zum Führen der Folie.

Die DE 10 2005 051 874 A1 offenbart eine Blasfolienextrusionsanlage mit einer Kalibriervorrichtung. Diese Kalibriervorrichtung umfasst Folienführungselemente, deren Aufbau jedoch nicht näher gezeigt ist.

Die Erfahrung zeigt, dass das poröse Material verschmutzt, so dass die luftdurchlässigen Poren zugesetzt und damit blockiert werden. Nach einer gewissen Zeit ist damit ein zuverlässig tragendes Luftpolster nicht mehr erzeugbar. Das poröse Material der Bläserelemente muss gereinigt werden. Währenddessen steht die Führungseinrichtung nicht zur Verfügung, so dass unter Umständen die gesamte Anlage, z. B. die Blasfolienextrusionsanlage, nicht einsetzbar ist.

Die Aufgabe der vorliegenden Erfindung ist es daher, eine Führungseinrichtung vorzuschlagen, mit welcher sich die Stillstandszeit reduzieren lässt.

Diese Aufgabe wird gelöst durch die Merkmale des Anspruchs 1 und 15 sowie durch ein Verfahren mit dem Merkmale des Anspruchs 16.

Demnach ist zumindest ein Befestigungselement vorgesehen, mit welchem das Trägerelement und das folienführende Element lösbar aneinander befestigbar sind, wobei das folienführende Element (34) zumindest teilweise aus gesintertem Kunststoffmaterial besteht.

Somit kann also das folienführende Element, wenn es soweit verschmutzt ist, dass es seiner Funktion nicht mehr gerecht wird, vom Trägerelement gelöst und beispielsweise separat gereinigt werden. Sind beispielsweise weitere folienführende Elemente bereits vorhanden, so können diese unmittelbar wieder an den Trägerelementen befestigt werden, so dass die Führungseinrichtung nach kurzer Zeit wieder zur Verfügung steht. Die Stillstandszeit der Anlage, in welcher die Führungseinrichtung verwendet wird, beschränkt sich damit auf die Zeit, die zum Auswechseln der folienführenden Elemente benötigt wird. Während die demontierten folienführenden Elemente gereinigt werden, kann also die Anlage, insbesondere die Blasfolienextrusionsanlage, wieder Folie produzieren.

Besonders vorteilhaft ist es, wenn das Befestigungselement eine Klemmeinrichtung ist, mit welchem das Trägerelement und das folienführende Element klemmend aneinander haltbar sind. In diesem Fall liegt eine im Wesentlichen definierte Befestigungskraft vor, so dass das Personal, das die Auswechselung vornimmt, nicht auf die Befestigungskraft Acht geben muss.

Dies führt dazu, dass das Auswechseln zügig erfolgt, so dass die Stillstandszeit weiter reduziert wird.

In weiterer Ausgestaltung ist vorgesehen, dass das Befestigungselement werkzeuglos betätigbar ist. Damit kann mit einem Handgriff die Klemmkraft des Befestigungselements aufgehoben und das folienführende Element abgenommen werden. Damit wird der Wechselvorgang abermals beschleunigt und die Stillstandszeit wird weiter verkürzt.

In einer vorteilhaften Ausführungsform kann dabei das Befestigungselement wenigstens ein klammerartiges Element sein. Bei einem klammerartigen Element sind in der Regel zumindest zwei einander zugewandte Klemmpunkte, -linien oder -flächen vorgesehen, welche jeweils eine in die Richtung des oder der anderen Klemmpunkte gerichtete Kraft zur Verfügung stellen. Damit können diese Klemmpunkte, -linien oder -flächen Teile zwischen sich klemmend halten. Bei mehreren Teilen, wie hier das Trägerelement und das folienführende Element, können diese mit diesen Kräften auch gegeneinander gedrückt werden. Dabei stellt das klammerartige Element eine Kraft zur Verfügung, die größer ist als die Kraft, die durch den im Inneren des Bläserelements herrschenden Luftdruck erzeugt wird. Damit wird erreicht, dass das klammerartige Element nicht durch den Luftdruck mit einer derart großen Gegenkraft beaufschlagt wird, dass die Luft zwischen Trägerelement und folienführendem Element entweichen kann.

In einer alternativen und ebenfalls vorteilhaften Ausführungsform der Erfindung ist als Klemmelement zumindest ein Kniespannhebel vorgesehen, welcher vorzugsweise am Trägerelement angeordnet ist. Ein Kniespannhebel ist ebenfalls in der Lage, entlang von Klemmpunkten, -linien oder -flächen Kräfte bereitzustellen, so dass das Trägerelement und das folienführende Element aneinander drückbar sind. Ein Kniespannhebel hat dabei den Vorteil, dass er schnell und einfach betätigbar ist.

In weiterer Ausgestaltung der Erfindung ist vorgesehen, dass das Trägerelement und/oder das folienführende Element zumindest einen Haken und/oder zumindest eine Schiene umfassen, in welche Teile des folienführenden Elements respektive des Trägerelements einhängbar und/oder einsteckbar sind. Um den Konstruktions- bzw. den Herstellaufwand gering zu halten, ist es dabei bevorzugt, nur das Trägerelement auf diese Weise auszugestalten. Das folienführende Element und das Trägerelement können damit auf sehr einfache Weise miteinander in eine Verbindung gebracht werden, wobei beide zunächst, beispielsweise entlang einer Linie, in Kontakt bringbar sind. Das folienführende Element kann nun "zugeklappt" werden, so dass das folienführende Element und das Trägerelement den nötigen Hohlraum bilden können. Dadurch wird eine sehr einfache und damit schnelle Montagemöglichkeit zur Verfügung gestellt. Die der Schiene oder dem Haken gegenüber liegende Berührkante von folienführendem Element und Trägerelement kann dann vorteilhafterweise durch eines der oben beschriebenen Befestigungselemente mit einer Kraft beaufschlagt werden, so dass in dieser Kombination eine besonders einfache und schnelle Austauschmöglichkeit zur Verfügung gestellt ist, wobei der Austausch auch erfolgen kann, während die gesamte Führungseinrichtung beispielsweise in der Blasfolienextrusionsanlage verbleiben kann.

In einer Weiterbildung der Erfindung ist zwischen dem Trägerelement und dem folienführenden Element wenigstens ein Dichtelement angeordnet, welches dazu dient, einen Luftaustritt aus dem durch die beiden vorerwähnten Elemente gebildeten Hohlraum zu verhindern. Vorteilhaft ist dabei, wenn das Dichtelement ein kompressibles Material umfasst, so dass eine hohe Dichtigkeit gewährleistet ist.

In einer weiteren, vorteilhaften Ausgestaltung der Erfindung ist vorgesehen, dass das folienführende Element einen umlaufenden Rand umfasst, welche eine Fläche definiert. Diese Fläche kann sich in einer Ebene erstrecken, also zweidimensional sein. Vorstellbar ist aber auch, dass es sich um eine gekrümmte Fläche handelt, bei der dann aber vorteilhafterweise zwei Ränder, die sich gegenüber liegen, gerade und parallel zueinander verlaufen. Weiterhin ist in der beschriebenen, erfindungsgemäßen Ausgestaltung vorgesehen, dass sich zumindest Teile der Oberfläche des folienführenden Elements, die sich innerhalb der Ränder befinden, außerhalb der beschriebenen Fläche befinden. Dabei sind diese Teile der Oberfläche so ausgeformt, dass sie die Führung der Folie übernehmen. In einer besonders bevorzugten Ausführungsform der Erfindung ist vorgesehen, dass die Oberfläche innerhalb des genannten Randes wenigstens zwei lokale Maxima aufweist, welche durch eine Vertiefung miteinander verbunden sind, wobei Teile der die Maxima verbindenden Flächenbereiche kreisbogenförmig ausgebildet sind, wobei der Radius dieses Kreisbogens vorteilhafterweise dem Radius des größtmöglichen auf der Maschine produzierbaren Formates entspricht.

Insbesondere ist es vorteilhaft, wenn die innerhalb des genannten Randes liegenden Oberflächenbereiche kanten- und/oder eckenlos ausgestaltet sind. Damit werden besonders gut mögliche Beschädigungen an dem Folienschlauch vermieden.

In einer vorteilhaften Ausgestaltung des folienführenden Elements ist vorgesehen, dass dieses zumindest teilweise aus gesintertem Kunststoffmaterial besteht. Dies ist eine besonders kostengünstige Möglichkeit zur Herstellung eines folienführenden Elements mit einer ausreichenden Luftdurchlässigkeit, wobei bei Verschmutzungen, die - wie eingangs erwähnt wurde - einen Austausch dieser Elemente in der Führungseinrichtung notwendig machen, auf eine Reinigung, die teilweise aufwändig und damit teuer ist, verzichtet werden kann. Stattdessen können die verschmutzten Elemente entsorgt und durch neue Elemente ersetzt werden.

Vorteilhaft ist dabei, wenn das Kunststoffmaterial Polyethylen umfasst oder gar vollständig Polyethylen ist, so dass das folienführende Element auf einfache Weise recycelt werden kann.

Das Trägerelement, an dem wenigstens ein Befestigungselement, wie es oben beschrieben wurde, angeordnet ist, kann bereits selbstständig eine Erfindung darstellen. Ebenso kann ein in den voranstehenden Abschnitten beschriebenes, folienführendes Element eine eigenständige Erfindung darstellen.

Weiterhin ist vorgesehen, dass ein Stützelement vorgesehen ist, über welches das Trägerelement mit einem Stellmechanismus der Führungseinrichtung verbindbar ist, wobei zumindest eine Befestigung vorgesehen ist, mit welchem das Trägerelement und das Stützelement lösbar aneinander befestigbar sind.

Mit anderen Worten stellen das folienführende Element und das Trägerelement eine Einheit dar, die komplett von der Führungseinrichtung gelöst und abgenommen wird. Damit kann die Stillstandszeit ebenfalls deutlich reduziert werden. Die genannte Einheit kann beispielsweise außerhalb der Führungseinrichtung zwecks Reinigung getrennt werden oder auch komplett gereinigt werden.

Das zumindest eine Stützelement ist vorzugsweise an beweglichen Teilen der Führungseinrichtung befestigt, was bedeutet, dass das Stützelement relativ zum Grundrahmen verlagerbar ist, um eine Anpassung an den Foliendurchmesser durchführen zu können. Das zumindest eine Stützelement kann dabei auch mehrteilig ausgeführt sein, wobei ein Teil an dem Trägerelement befestigt sein kann. Eine Befestigung kann dabei eine klemmende Befestigung, eine Schraubbefestigung, ein Hebelmechanismus oder eine beliebige andere Befestigungseinrichtung sein, die dafür Sorge trägt, dass das folienführende Element einen festen Abstand zu dem beweglichen Teil der Führungseinrichtung, an dem das Stützelement befestigt ist. Alternativ kann das Stützelement auch an dem Trägerelement befestigt sein und lösbar mit dem beweglichen Teil der Führungseinrichtung verbunden sein.

In einer vorteilhaften Ausführungsform ist vorgesehen, dass das zumindest ene Stützelement zur Zuführung eines Fluids ausgebildet ist, so dass neben der Stützwirkung auch dem folienführenden Element das notwendige Fluid über das Stützelement zuführbar ist. Auf diese Weise können Bauteile eingespart werden, was zu Kosteneinsparungen führt. Dazu umfasst das Stützelement vorzugsweise einen durchgehenden Hohlraum, insbesondere ist es als Rohrstück ausgebildet. An dem dem folienführenden Element abgewandten Ende ist dann vorteilhafterweise eine Zuführleitung für das Fluid befestigt.

In einer besonders vorteilhaften Weiterbildung der Erfindung ist vorgesehen, dass die Befestigung als Bajonettverschluss ausgebildet ist. In diesem Fall ist der Austausch eines Bläserelements mit nur sehr wenigen Handgriffen durchführbar, was zu einer zusätzlichen Verkürzung der Stillstandszeit der Vorrichtung führen kann.

Die oben genannte Aufgabe wird auch gelöst durch eine Blasfolienanlage nach dem Anspruch 15. Demnach ist vorgesehen, dass die Blasfolienanlage eine gemäß der obigen Beschreibung und/oder gemäß der Ansprüche 1 bis 14 ausgestaltet ist.

Die genannte Aufgabe wird zusätzlich gelöst durch ein Verfahren nach dem Anspruch 16. Damit werden die gleichen Vorteile erzielt, wie sie im Zusammenhang mit der erfindungsgemäßen Führungseinrichtung erzielt werden.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit dem erfindungsgemäßen Kalibrierkorb und jeweils umgekehrt, so dass bezüglich der Offenbarung zu den einzelnen Aspekten der Erfindung stets wechselseitig Bezug genommen wird beziehungsweise werden kann.

Die einzelnen Figuren zeigen:
- Fig. 1: Prinzipskizze einer erfindungsgemäßen Blasfolienextrusionsanlage
- Fig. 2: Ausführungsbeispiel einer erfindungsgemäßen Führungseinrichtung
- Fig. 3: Ein erstes Ausführungsbeispiel eines Bläserelements
- Fig. 4: Ein zweites Ausführungsbeispiel eines Bläserelements
- Fig. 5: Ein drittes Ausführungsbeispiel eines Bläserelements mit abgeklapptem folienführendem Element
- Fig. 6: Ein drittes Ausführungsbeispiel eines Bläserelements
- Fig. 7: Ein viertes Ausführungsbeispiel eines Bläserelements

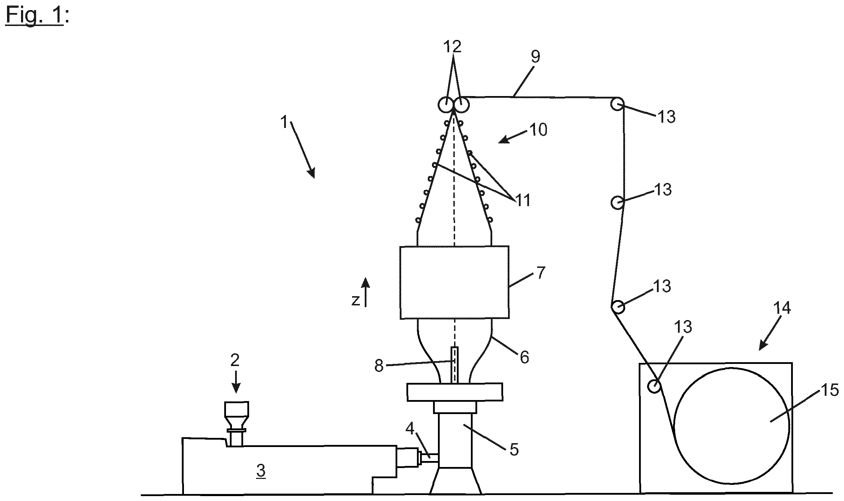

Fig. 1 zeigt eine Prinzipskizze einer erfindungsgemäßen Blasfolienextrusionsanlage 1, welche eine erfindungsgemäße Kalibriereinrichtung 7 umfasst. Dem Einfüllstutzen 2 wird ein Kunststoff oder ein Kunststoffgemisch zugeführt, welches dann in dem Extruder 3 plastifiziert wird. Die entstandene Masse wird über eine Verbindungsleitung 4 dem Blaskopf 5 zugeführt, mit welchem aus der Masse ein Folienschlauch 9 gebildet wird. Dem Blaskopf 5 können weitere Extruder zugeordnet sein, so dass mehrschichtige Folien herstellbar sind.

Der Folienschlauch 9 verlässt den Blaskopf durch eine in dieser Darstellung nicht sichtbaren Ringdüse in Transportrichtung z.

Der Folienschlauch 9 liegt beim Verlassen des Blaskopfes 5 zunächst als Folienblase 6 vor, in der gegenüber dem Umgebungsdruck ein leicht erhöhter Innendruck vorliegt. Dies wird durch die Zuführung von Druckluft durch den Gebläsestutzen 8 erreicht. Aufgrund des erhöhten Innendrucks weitet sich das noch nicht verfestigte Material des Folienschlauches auf. Letztlich werden auf diese Weise sowohl der Durchmesser des fertigen Folienschlauches als auch die Dicke des Folienmaterials eingestellt.

Anschließend gelangt die noch nicht verfestigte Folienblase 6 in die als Kalibrierkorb 7 bezeichnete Kalibriereinrichtung. Hier wird der Durchmesser des Folienschlauches begrenzt. Innerhalb der Kalibriereinrichtung kühlt der Folienschlauch auf eine Temperatur ab, bei der eine nachträgliche Verformung nicht mehr oder nur noch unter Einsatz großer Kräfte möglich ist. Die Position, an der dieser Phasenübergang stattfindet, wird oft als "Frostlinie" bezeichnet.

Innerhalb einer Kalibriereinrichtung des Standes der Technik wird der Folienschlauch von Platten geführt, durch welche Druckluft auf den Folienschlauch gerichtet wird. Diese Druckluft dient einerseits der Kühlung des Folienschlauches und verhindert andererseits eine Berührung der Platten durch den Folienschlauch. In weiteren Kalibriereinrichtungen kann der Folienschlauch auch durch Rollen geführt werden.

Nach dem Verlassen der Kalibriereinrichtung gelangt der Schlauch in eine Flachlegeeinrichtung 10, in welcher der Folienschlauch nahezu vollständig zu einer doppellagigen Folienbahn umgeformt wird. Dabei wird der Folienschlauch zwischen Paaren von Führungselementen 11 geführt, die im Verlauf der Transportrichtung z einen immer geringeren Abstand voneinander einnehmen. Die Führungselemente können analog zu den in den erfindungsgemäßen Kalibriereinrichtungen enthaltenen Folienführungselementen ausgestaltet sein. Die vollständige Flachlegung erfolgt durch eine Abquetschvorrichtung, die aus einem Paar von Abquetschwalzen 12 besteht. Die Abquetschwalzen 12 verhindern dabei einen Verbleib von Luft innerhalb des Folienschlauchs bei seinem weiteren Transport.

Der Folienschlauch 9 beziehungsweise die daraus entstandene Folienbahn kann nun durch eine nicht gezeigte Reversiervorrichtung geführt werden oder, wie im Fall der gezeigten Vorrichtung, direkt über Umlenkwalzen 13 einer Wickelvorrichtung 14 zugeführt werden, wo die Folienbahn zu einem Wickel 15 verarbeitet wird.

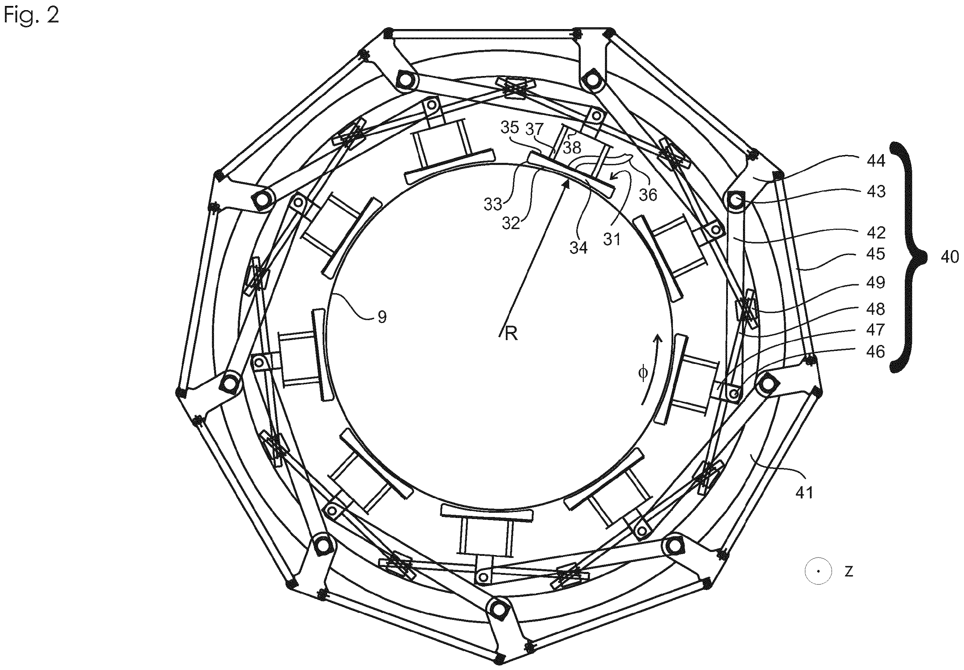

Die Figur 2 zeigt eine Aufsicht auf eine erfindungsgemäße Führungseinrichtung, im Folgenden Kalibrierkorb 7 genannt, die mit den Bläserelementen 31 den Folienschlauch 9 führt. Auf einer Ebene des Kalibrierkorbes in Richtung der Transportrichtung z gesehen (die genannte Ebene liegt dabei im Wesentlichen orthogonal zur Transportrichtung) ist eine Anzahl - im gezeigten Ausführungsbeispiel 9 - an Bläserelementen 31 vorzugsweise gleichmäßig über den Umfang des Folienschlauches 9 verteilt. Ein Kalibrierkorb umfasst in der Regel mehrere solcher Bläserelementanordnungen, wobei die Bläserelemente zweier benachbarter Ebenen gegeneinander in Umfangsrichtung φ verdreht sind, so dass der Folienschlauch 9 beim Durchlauf durch den Kalibrierkorb 7 möglichst über seinen gesamten Umfang geführt wird.

Die dem Folienschlauch 9 zugewandten Oberflächen der Bläserelemente 31 können gerade, also tangential zur Umfangsrichtung des Folienschlauches 9 verlaufen. Sie können auch eine kreisbogenförmige Oberfläche 32 umfassen, wie es in der Figur 2 dargestellt ist, wobei der Radius des zugehörigen Kreisbogens vorzugsweise dem Radius R des größten, mit dem Kalibrierkorb führbaren Folienschlauchs entspricht bzw. geringfügig größer ist, so dass bei dieser Größe des Folienschlauchs dieser die flächenmäßig größtmögliche Führung umfasst. Der Kreisbogenradius kann allerdings auch größer sein als der Radius des größten, mit dem Kalibrierkorb führbaren Folienschlauchs. Dies kann herstellungstechnische Vorteile haben, wenn Kalibrierkörbe unterschiedlicher Größendurchmesser mit einheitlichen Bläserelementen 31 ausgestattet werden sollen.

Bläserelemente 31 umfassen vorzugsweise zumindest zwei Elemente, wobei das folienführende Element 34 das dem Folienschlauch 9 zugewandte Element ist, welches an einem Trägerelement 35 angeordnet ist. Das Trägerelement wiederum kann eine rückwärtige Öffnung umfassen, an welcher ein Schlauch 36 befestigt ist. Über diesen Schlauch ist ein gegenüber dem Atmosphärendruck unter leichtem Überdruck stehendes Gas, insbesondere Luft, in den durch das Trägerelement 35 und das folienführende Element umschlossenen Raum führbar. Dazu ist der Schlauch 36 direkt oder indirekt an einer Überdruckquelle, beispielsweise an ein Gebläse oder einen Verdichter, angeschlossen. Die Ecken 33 der Folienführungselemente sind vorzugsweise abgerundet, wobei eine Beschädigung des Folienschlauches 9 weitgehend vermieden wird. Das Trägerelement 35 ist vorzugsweise über Stehbolzen 37 an einer Halteplatte 38 befestigt.

Die Bläserelemente sind über einen Stellmechanismus 40 verstellbar, wobei die Bläserelemente derart in radialer Richtung verstellbar sind, dass die Mittelpunkte des Folienschlauches 9 und des Kreisbogens der Oberfläche des folienführenden Elements im Wesentlichen auf gleicher Position verbleiben. Eine Verschiebung der Bläserelemente 31 in Umfangsrichtung des Folienschlauches ist dabei möglich und nicht nachteilig.

Der Stellmechanismus 40 ist an dem Grundrahmen 41 des Kalibrierkorbes 7 angeordnet und umfasst zunächst Schwenkhebel 42, welche einendig schwenkbar in Drehlagern 43 im Grundrahmen angeordnet sind. Die Schwenkhebel 42 sind mit Stellhebeln 44 drehfest verbunden, welche wiederum untereinander mit Koppelstangen 45 verbunden sind, so dass ein einzelner Antrieb, der nicht gezeigt ist, in der Lage ist, sämtliche Schwenkhebel 42 zu schwenken. Am freien Ende der Schwenkhebel sind über ein Drehgelenk 46 Halter 47 drehbar gelagert. Jeder Halter 47 trägt nicht nur die ihm jeweils zugeordnete Halteplatte 38, sondern auch Stangen 48, die sich in beide Richtungen von dem Halter 47 weg erstrecken. Die einander zugewandten Enden der Stangen 48 zweier benachbarter Halter 47 sind in einem gemeinsamen Schiebelager 49 verschieblich gelagert, wobei der Winkel zwischen diesen beiden Stangen 48 stets konstant bleibt.

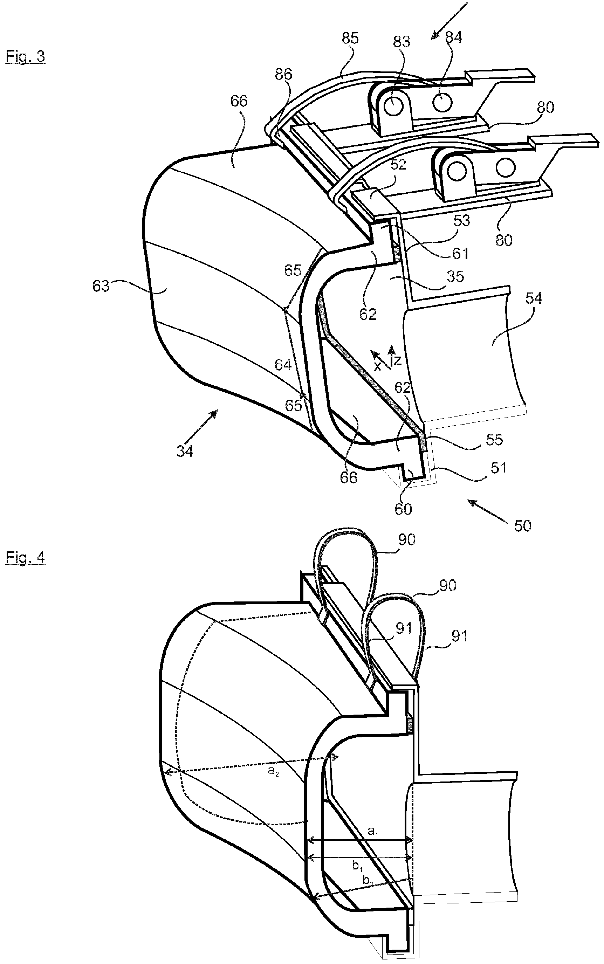

Die Figuren 3 bis 6 zeigen nun verschiedene Ausführungsbeispiele von Bläserelementen, wobei jeweils gleiche Bauteile mit gleichen Bezugszeichen bezeichnet werden, wobei der Übersichtlichkeit halber nicht alle Bezugszeichen jeweils in allen Figuren erscheinen.

Das Trägerelement 35 umfasst an seinem unteren Rand 50 eine Abkantung, vorzugsweise mit zwei Kanten, oder eine Abrundung, wobei eine u-förmige und schienenartige Vertiefung 51 entsteht. Die Vertiefung 51 dient der Aufnahme des Ansatzes 60 des folienführenden Elements 34. Anstelle einer Vertiefung können beispielsweise mehrere voneinander beabstandete Haken vorgesehen sein, welche demselben bereits beschriebenen Zweck dienen.

Im Bereich des oberen Randes des Trägerelements 35 kann eine weitere Abkantung 52 vorgesehen sein, welche im Vergleich zur Hauptfläche 53 des Trägerelements 35 einen Winkel von 90 Grad einnehmen kann. Diese Abkantung dient als Führungshilfe beim Einsetzen des folienführenden Elements 34, wobei eine korrekte Positionierung des folienführenden Elements 34 relativ zum Trägerelement 35 und damit relativ zum Kalibrierkorb erreichbar ist. In diesem Fall ist gewährleistet, dass der Folienschlauch 9 auf dem vorgesehenen Weg gefördert wird.

Das folienführende Element 34 umfasst nicht nur an seiner unteren Längsseite einen Ansatz 60, sondern auch an seiner oberen Längsseite einen Ansatz 61, der einem Zweck dient, der weiter unten beschrieben wird. Die Ansätze 60 und 61 können zusammen mit weiteren Bestandteilen des folienführenden Elements 34 einen umlaufenden Rand 62 bilden, mit welchem das folienführende Element 34 dichtend an dem Trägerelement 35 verbunden ist. Um die Dichtigkeit zu erhöhen, ist ein - vorzugsweise ebenfalls umlaufendes - Dichtelement 55, beispielsweise ein Gummiband, zwischen dem umlaufenden Rand des folienführenden Elements 34 und dem Trägerelement 35 vorgesehen. Der umlaufende Rand spannt eine Ebene in x-z-Richtung auf. Die übrige Außenoberfläche 63 des folienführenden Elements 34 liegt, abgesehen von den Ansätzen 60 und 61, im Wesentlichen vollständig außerhalb der genannten Ebene. Damit bilden das folienführende Element 34 und das Trägerelement 35 einen geschlossenen Raum, dem über den Anschlussstutzen 54 ein Fluid, insbesondere ein Gas, vorzugsweise Luft, zuführbar ist.

Die Außenoberfläche weist vorzugsweise gekrümmte Verläufe auf. In x-Richtung gesehen weist der Abstand der Außenoberfläche in der Mitte des folienführenden Elements 34 einen minimalen Abstand a₁ auf. Dieser Abstand wird zu den Enden des folienführenden Elements 34 stetig größer, wobei kurz vor den Enden der größte Abstand a₂ zu verzeichnen ist, bevor die Außenoberfläche unmittelbar an den Enden in die abgerundeten Ecken 33 übergeht, wie sie bereits im Zusammenhang mit der Figur 2 beschrieben worden sind. Der Zweck dieser Ausformung der Außenoberfläche mit Blickrichtung in x-Richtung wurde ebenfalls bereits im Zusammenhang mit der Figur 2 beschrieben, nämlich die optimale Führung des Folienschlauches 9 zumindest bei einem bestimmten Durchmesser desselben.

In z-Richtung gesehen (an einem festen Punkt in x-Richtung) verläuft das Profil anders. Hier ist das Maximum, also der Abstand b₁, vorzugsweise in der Mitte des folienführenden Elements vorgesehen. Das Maximum erstreckt sich in z-Richtung über den Bereich 64, d. h., in diesem Bereich verläuft die Außenoberfläche vorzugsweise parallel zur Außenwandung des Folienschlauchs 9. Zu den Seiten hin finden sich Bereiche 65, die abgerundet sind, d. h. das die Außenoberfläche in bzw. gegen die z-Richtung gesehen sich stetig weiter von dem Außenumfang des Folienschlauchs 9 entfernt. Mit anderen Worten befinden sich außerhalb des Bereichs 65 Bereiche, bei denen der Abstand b₂ kleiner ist als der Abstand b₁. Insbesondere einlaufseitig bietet eine solche Abrundung den Vorteil, dass Beschädigungen an der Folie vermieden werden können. Die Bereiche 65 können stetig in die Seitenwände 66 übergehen, welche beispielsweise orthogonal zur z-Richtung angeordnet ist.

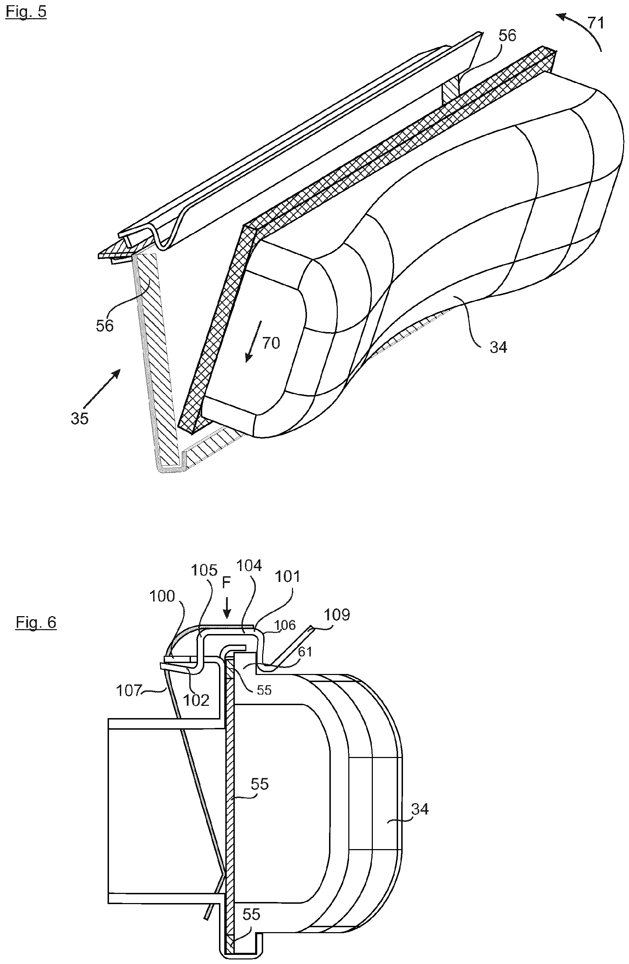

Anhand der Fig. 5 kann nun das Ansetzen des folienführenden Elements 34 an das Trägerelement 35 erläutert werden. Zunächst wird das Element 34 in einer Linearbewegung, die mit dem Pfeil 70 angedeutet ist, mit dem unteren Ansatz 60 in die Vertiefung 51 eingeführt. Das Dichtelement 55, welches in dieser Figur nicht gezeigt ist, ist zu diesem Zeitpunkt bereits an dem Element 34 oder bevorzugt an dem Trägerelement 35 angeordnet. Mit einer Schwenkbewegung, die durch den gekrümmten Pfeil 71 angedeutet ist, wird nun der obere Ansatz 61 in Richtung auf das Trägerelement 35 bewegt, bis das folienführende Element 34 mit seinem Rand vollständig an dem Trägerelement 35 und/oder dem Dichtelement 55 anliegt. Um eine Zentrierung des folienführenden Elements 34 relativ zum Trägerelement 35 zu erreichen, ist seitlich an dem Trägerelement 35 wenigstens ein Führungsblech 56 angeordnet; vorzugsweise finden sich diese an beiden Seiten. An dieser Stelle ist zu erwähnen, dass die Positionsangaben "oben" und "unten" und "seitlich" in Bezug auf die Bestandteile des folienführenden Elements 34 und/oder der Trägerelements auch vertauscht sein können. So können beispielsweise die Führungsbleche 56 auch oben und/oder unten angeordnet sein. "Oben", "unten" und "seitlich" beziehen sich dabei auf die üblicherweise gebräuchlichen Angaben.

Zum dauerhaften Andrücken des Ansatzes 61 und damit des folienführenden Elements 34 an das Trägerelement 35 sind Befestigungseinrichtungen vorgesehen. Diese können in vielfältiger Weise ausgeführt sein. Ein Beispiel wären Schrauben, die den Ansatz 61 durchstoßen und in Gewinde, die in dem Trägerelement eingebracht sind, einschraubbar sein.

Bevorzugt sind jedoch einfacher zu handhabende und werkzeuglos betätigbare Befestigungseinrichtungen, wie sie anhand der Ausführungsbeispiele der Figuren 3 bis 6 erläutert werden.

In der Figur 3 sind rückseitig an dem Trägerelement 35 Bleche 80 angeordnet, auf denen an sich bekannte Kniespannhebel 81 angeordnet sind, bei denen der Hebel 82 um den Gelenkpunkt 83 schwenkbar ist. Um einen weiteren Gelenkpunkt 84 ist eine Klammer 85 schwenkbar, welche mit ihrem Haken 86 den Ansatz 61 mit einer Kraft beaufschlagt, welche in die Richtung auf das Trägerelement 35 gerichtet ist. Sobald sich der Gelenkpunkt 84 und der Aufsetzpunkt des Hakens 86 unterhalb des Gelenkpunkts 83 befinden, sind das folienführende Element 34 und das Trägerelement fest miteinander verspannt. Zum Lösen dieser Verspannung braucht nur der Hebel 82 um den Gelenkpunkt 83 geschwenkt zu werden, was auf einfache Weise manuell erfolgen kann. Nach dem Einsatz eines (neuen) folienführenden Elements 34 kann ein Verspannen durch erneutes Betätigen des Hebels 82 in umgekehrter Richtung erfolgen. Eine Betätigung der Befestigungseinrichtung ist demnach vollständig ohne Werkzeuge möglich.

In der Figur 4 ist eine sehr einfache und damit kostengünstige Variante einer Befestigungseinrichtung gezeigt. In diesem Fall handelt es sich um wenigstens eine Klammer 90, deren Schenkel 91 vorgespannt sind, wobei sie jeweils eine Kraft in Richtung des anderen Schenkels ausüben. Damit wird auf das folienführende Element 34 und das Trägerelement 35 eine Klemmkraft ausgeübt. Nach dem Ansetzen und Anschwenken des folienführenden Elements 34 an das Trägerelement 35 kann nun die wenigstens eine Klammer 90 von oben auf den Ansatz 61 und das Trägerelement 35 aufgeschoben werden, so dass beide Elemente 34, 35 aneinander angedrückt werden.

In den Figuren 5 und 6 ist ein weiteres Ausführungsbeispiel gezeigt, bei dem das Verspannen der beiden Elemente 34, 35 ohne eine manuelle Betätigung erfolgen kann. Dazu umfasst das Trägerelement 35 wenigstens einen rückseitigen Ansatz 100, in den wenigstens ein Klemmelement 101 einhängbar ist. Dazu ist das Klemmelement 101 mit einem Ende in Hakenform 102 ausgestattet. Diese Hakenform kann in dem Klemmelement integriert oder separat angesetzt und befestigt sein. Der rückseitige Ansatz 100 kann also für das Klemmelement einen Gelenkpunkt 103 zur Verfügung stellen. Wichtig ist jedoch der folgende Aspekt: Das Klemmelement 101 umfasst einen Bogen 104, so dass das Klemmelement ähnlich wie die Klammer im Ausführungsbeispiel der Figur 4 eine Klemmkraft zwischen den Schenkeln 105 und 106 aufbringt, mit welcher die Elemente 34 und 35 zusammen gehalten werden. An dem Trägerelement 35 ist ein Federelement 107 angeordnet, vorzugsweise befestigt, welches das Klemmelement 101 mit einer Kraft in Richtung des Pfeils F beaufschlagt, wobei diese Kraft senkrecht zur Klemmkraft wirkt. Damit wird das Klemmelement von oben in Richtung auf das Trägerelement gedrückt. Der Vorteil dieser Kraft wird im Zusammenhang mit der wenigstens einen Leiste 109 deutlich, welche ein integrierter Fortsatz des Klemmelements 101 oder ein an diesem befestigtes Bauteil ist. Durch dessen schräge Anordnung wird nun durch das Schwenken des folienführenden Elements 35 in Richtung des Pfeils 71 (siehe Figur 5) dieses unter die Leiste 109 geführt. Durch das weitergehende Schwenken wird nun die Leiste 109 und damit das Klemmelement 101 gegen die Federkraft F nach oben angehoben, bis der Ansatz 61 den Schenkel 106 passiert hat. Sodann drückt die Federkraft F das Klemmelement 101 wieder in seine Ausgangsposition, in der es die Elemente 34, 35 aneinander andrückt.

Die Montage des folienführenden Elements an das Trägerelement 35 kann somit ohne Werkzeug und insbesondere auch ohne manuelle Betätigung erfolgen, was die Montage sehr stark vereinfacht. Zur Demontage muss nun lediglich das Klemmelement 101 angehoben werden, so dass der Ansatz 61 frei unter dem Klemmelement hindurch führbar ist.

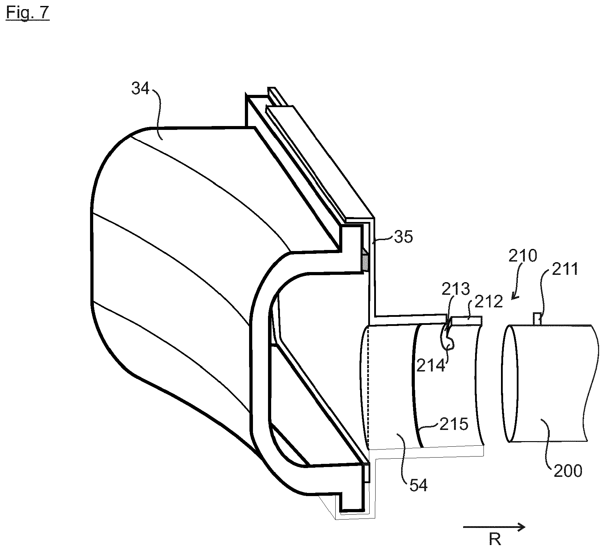

Die Figur 7 zeigt nun Teile eines Ausführungsbeispiels. Gezeigt ist das Bläserelement, umfassend das folienführende Element 34 und das Trägerelement 35, wobei das Trägerelement wiederum einen Anschlussstutzen 54 umfasst.

Der Stehbolzen ist in diesem Ausführungsbeispiel als Rohr 200 ausgeführt, welches beispielsweise im Außendurchmesser kleiner ist als der Innendurchmesser des Anschlussstutzens. Damit ist der Anschlussstutzen auf das Rohr 200 aufschiebbar. Zur sicheren Befestigung ist ein Bajonettverschluss 210 vorgesehen, wobei das Rohr 200 wenigstens einen Stift 211 umfasst. Als Gegenstück umfasst der Anschlussstutzen 54 einen axialen Schlitz 212 der sich in einen in Umfangsrichtung verlaufenden Schlitz 213 fortsetzt. Am Ende dieses Schlitzes ist eine rundliche Öffnung 214 vorsehen, die wieder etwas nach hinten in Richtung R springt.

Zum Befestigen wird das Bläserelement so auf das Rohr aufgeschoben, dass der Stift entlang des Schlitzes 212 gleiten kann. Anschließend wird das Bläserelement gedreht, bis der Stift in die Öffnung greift.

Weiterhin ist eine Dichtung 215 vorgesehen, die zwei Aufgaben erfüllt. Zunächst stellt sie eine Federkraft zur Verfügung, die den Stift 211 in die Öffnung 214 in Richtung R drückt, so dass ein unbeabsichtigtes Verdrehen vermieden wird. Zudem verhindert sie ein Entweichen des Fluids durch den Befestigungsbereich. Die Federkraft kann selbstverständlich durch ein anderes Element als die Dichtung zur Verfügung gestellt werden.

| **Bezugszeichenliste** | |
|---|---|
| 1 | Blasfolienextrusionsanlage |
| 2 | Einfüllstutzen |
| 3 | Extruder |
| 4 | Verbindungsleitung |
| 5 | Blaskopf |
| 6 | Folienblase |
| 7 | Kalibriereinrichtung |
| 8 | Gebläsestutzen |
| 9 | Folienschlauch |
| 10 | Flachlegeeinrichtung |
| 11 | Führungselement |
| 12 | Abquetschwalze |
| 13 | Umlenkwalze |
| 14 | Wickelvorrichtung |
| 15 | Wickel |
| | |
| 31 | Bläserelement |
| 32 | Kreisbogenförmige Oberfläche |
| 33 | Ecke der Folienführungselemente |
| 34 | Folienführendes Element |
| 35 | Trägerelement |
| 36 | Schlauch |
| 37 | Stehbolzen |
| 38 | Halterplatte |
| | |
| 40 | Stellmechanismus |
| 41 | Grundrahmen |
| 42 | Schwenkhebel |
| 43 | Drehlager |
| 44 | Stellhebel |
| 45 | Koppelstange |
| 46 | Drehgelenk |
| 47 | Halter |
| 48 | Stange |
| 49 | Schiebelage |
| | |
| 50 | Unterer Rand des Trägerelements |
| 51 | Vertiefung |
| 52 | Abkantung |
| 53 | Hauptfläche des Trägerelements 35 |
| 54 | Anschlussstutzen |
| 55 | Dichtelement |
| | |
| 60 | Ansatz |
| 61 | Ansatz |
| 62 | Umlaufender Rand |
| 63 | Außenoberfläche |
| 65 | Bereiche |
| 66 | Seitenwand |
| | |
| 70 | Pfeil |
| 71 | Gekrümmter Pfeil |
| | |
| 80 | Bleche |
| 81 | Kniespannhebel |
| 82 | Hebel |
| 83 | Gelenkpunkt |
| 84 | Gelenkpunkt |
| 85 | Klammer |
| 86 | Haken |
| | |
| 90 | Klammer |
| 91 | Schenkel |
| 100 | Rückseitiger Ansatz |
| 101 | Klemmelement |
| 102 | Hakenform |
| 103 | Gelenkpunkt |
| 104 | Bogen |
| 105 | Schenkel |
| 106 | Schenkel |
| 107 | Federelement |
| 109 | Leiste |
| | |
| a₁ | Minimaler Abstand |
| a₂ | Größter Abstand |
| b₁ | Abstand |
| b₂ | Abstand |
| F | Pfeil |
| R | Radius |
| φ | Umfangsrichtung |

## Patentansprüche

1. Führungseinrichtung zum Führen einer Kunststofffolie, wobei die Kunststofffolie mittels eines Luftpolsters führbar ist, wobei die Führungseinrichtung mehrere Bläserelemente (31) umfasst, wobei
jedes Bläserelement zumindest ein Trägerelement (35), und zumindest ein folienführendes Element (34),
• welches zumindest teilweise porös, vorzugsweise mikroporös ist, und
• welches mit dem Trägerelement (35) verbunden ist,
umfasst,
**dadurch gekennzeichnet,**
**dass** zumindest ein Befestigungselement vorgesehen ist, mit welchem das Trägerelement (35) und das folienführende Element (34) lösbar aneinander befestigbar sind und
**dass** das folienführende Element (34) zumindest teilweise aus gesintertem Kunststoffmaterial besteht.

2. Führungseinrichtung nach Anspruch 1,
**dadurch gekennzeichnet, dass**
das Befestigungselement eine Klemmeinrichtung ist, wobei die Klemmeinrichtung ein Klemmelement (101) umfasst mit welchem das Trägerelement (35) und das folienführende Element (34) klemmend aneinander haltbar sind.

3. Führungseinrichtung nach dem vorstehenden Anspruch,
**dadurch gekennzeichnet, dass**
das Klemmelement (101) werkzeuglos betätigbar ist.

4. Führungseinrichtung nach einem der Ansprüche 2 oder 3,
**dadurch gekennzeichnet, dass**
das Klemmelement (101) eine Klammer (90) umfasst.

5. Führungseinrichtung nach einem der Ansprüche 2 bis 4,
**dadurch gekennzeichnet, dass**
das Klemmelement (101) einen Kniespannhebel (81) umfasst.

6. Führungseinrichtung nach einem der vorstehenden Ansprüche,
**dadurch gekennzeichnet, dass**
das Trägerelement (35) zumindest einen Haken (86) oder zumindest eine Schiene umfasst, in welche Teile, insbesondere der Rand des folienführenden Elements (34) einhängbar oder einsteckbar sind.

7. Führungseinrichtung nach einem der vorstehenden Ansprüche,
**dadurch gekennzeichnet, dass**
zwischen Trägerelement (35) und folienführendem Element (34) ein Dichtelement (55) angeordnet ist.

8. Führungseinrichtung nach dem vorstehenden Anspruch,
**dadurch gekennzeichnet, dass**
das Dichtelement (55) ein kompressibles Material umfasst.

9. Führungseinrichtung nach einem der vorstehenden Ansprüche,
**dadurch gekennzeichnet, dass**
das folienführende Element (34) einen umlaufenden Rand (62) umfasst, mit welchem es gegen das Trägerelement (35) anstellbar ist, wobei zumindest Teile der Oberflächenbereiche des folienführenden Elements (34) außerhalb der durch den umlaufenden Rand (62) definierten Fläche liegen.

10. Führungseinrichtung nach dem vorstehenden Anspruch,
**dadurch gekennzeichnet, dass**
die innerhalb des Randes liegenden Oberflächenbereiche kanten- und/oder eckenlos ausgeformt sind.

11. Führungseinrichtung nach einem der vorstehenden Ansprüche,
**dadurch gekennzeichnet, dass**
das Kunststoffmaterial Polyethylen umfasst.

12. Führungseinrichtung nach einem der vorstehenden Ansprüche **dadurch gekennzeichnet, dass**
zumindest ein Stützelement (37) vorgesehen ist, über welches das Trägerelement mit einem Stellmechanismus der Führungseinrichtung verbindbar ist. zumindest eine Befestigung vorgesehen ist, mit welchem das Trägerelement (35) und das Stützelement lösbar aneinander befestigbar sind.

13. Führungseinrichtung nach dem vorstehenden Anspruch
**dadurch gekennzeichnet, dass**
das Stützelement zur Zuführung eines Fluids ausgebildet ist und insbesondere ein Rohrstück umfasst.

14. Führungseinrichtung nach einem der beiden vorstehenden Ansprüche
**dadurch gekennzeichnet, dass**
die Befestigung als Bajonettverschluss ausgebildet ist.

15. Blasfolienanlage zur Herstellung einer Kunststofffolie,
mit einem Blaskopf zur Extrusion der Kunststofffolie und einer Führungseinrichtung
**dadurch gekennzeichnet, dass**
die Führungseinrichtung gemäß einem der Ansprüche 1 bis 14 ausgebildet ist.

16. Verfahren zum Führen einer Kunststofffolie, wobei die Kunststofffolie mittels eines Luftpolsters geführt wird, wobei mehrere Bläserelemente (31) in einer Führungseinrichtung verwendet werden, wobei jedes Bläserelement (31) zumindest ein Trägerelement (35) und zumindest ein folienführendes Element (34),
• welches zumindest teilweise porös, vorzugsweise mikroporös ist, und
• welches mit dem Trägerelement (35) verbunden ist,
umfasst
**dadurch gekennzeichnet, dass**
zumindest ein Befestigungselement vorgesehen ist, mit welchem das Trägerelement (35) und das folienführende Element (34) lösbar aneinander befestigt werden wobei das folienführende Element (34) zumindest teilweise aus gesintertem Kunststoffmaterial besteht.

## Claims

1. A guiding device for guiding a plastic film, wherein the plastic film can be guided by means of an air cushion, wherein the guiding device comprises a plurality of blower elements (31), wherein each blower element comprises at least one carrier element (35), and at least one film-guiding element (34),
• which is at least partially porous, preferably microporous, and
• which is connected to the carrier element (35),
**characterized in**
**that** at least one fastening element is provided, with which the carrier element (35) and the film-guiding element (34) can be detachably fastened to each other and **that** the film-guiding element (34) consists at least partially of sintered plastic material.

2. The guiding device according to claim 1,
**characterized in that**
the fastening element is a clamping device, wherein the clamping device comprises a clamping element (101), with which the carrier element (35) and the film-guiding element (34) can be held together in a clamping manner.

3. The guiding device according to the preceding claim,
**characterized in that**
the clamping element (101) can be actuated without tools.

4. The guiding device according to any one of claims 2 or 3,
**characterized in that**
the clamping element (101) comprises a clamp (90).

5. The guiding device according to any one of claims 2 to 4,
**characterized in that**
the clamping element (101) comprises a toggle clamping lever (81).

6. The guiding device according to any one of the preceding claims,
**characterized in that**
the carrier element (35) comprises at least one hook (86) or at least one rail, in which parts, in particular the edge of the film-guiding element (34), can be suspended or inserted.

7. The guiding device according to any one of the preceding claims,
**characterized in that**
a sealing element (55) is arranged between carrier element (35) and film-guiding element (34).

8. The guiding device according to the preceding claim,
**characterized in that**
the sealing element (55) comprises a compressible material.

9. The guiding device according to any one of the preceding claims,
**characterized in that**
the film-guiding element (34) comprises a circumferential edge (62), with which it can be placed against the carrier element (35), wherein at least parts of the surface regions of the film-guiding element (34) lie outside of the surface defined by the circumferential edge (62).

10. The guiding device according to the preceding claim,
**characterized in that**
the surface regions lying within the edge are shaped without edges and/or corner.

11. The guiding device according to any one of the preceding claims,
**characterized in that**
the plastic material comprises polyethylene.

12. The guiding device according to any one of the preceding claims,
**characterized in that**
at least one support element (37) is provided, by means of which the carrier element can be connected to an actuating element of the guide device, at least one fastening is provided, with which the carrier element (35) and the support element can be detachably fastened to each other.

13. The guiding element according to the preceding claim,
**characterized in that**
the support element is designed for feeding a fluid and comprises in particular a pipe piece.

14. The guiding device according to any one of the two preceding claims,
**characterized in that**
the fastening is designed as a bayonet fitting.

15. A blown film line for producing a plastic film,
having a blow head for the extrusion of the plastic film and a guiding device
**characterized in that**
the guiding device is designed according to any one of claims 1 to 14.

16. A method for guiding a plastic film, wherein the plastic film is guided by means of an air cushion, wherein a plurality of blower elements (31) are used in a guiding device, wherein each blower element (31) comprises at least one carrier element (35) and at least one film-guiding element (34),
• which is at least partially porous, preferably microporous, and
• which is connected to the carrier element (35),
**characterized in that**
at least one fastening element is provided, with which the carrier element (35) and the film-guiding element (34) are detachably fastened to each other, wherein the film-guiding element (34) consists at least partially of sintered plastic material.

## Revendications

1. Dispositif de guidage pour le guidage d'un film de matière plastique, dans lequel le film de matière plastique peut être guidé au moyen d'un coussin d'air, dans lequel le dispositif de guidage comprend plusieurs éléments de soufflage (31), dans lequel
chaque élément de soufflage comprend au moins un élément porteur (35) et au moins un élément de guidage de film (34),
• qui est au moins partiellement poreux, de préférence microporeux et
• qui est relié avec l'élément porteur (35),
**caractérisé en ce que**
au moins un élément de fixation est prévu, avec lequel l'élément porteur (35) et l'élément de guidage de film (34) peuvent être fixés l'un à l'autre de manière amovible et
l'élément de guidage de film (34) est constitué au moins partiellement d'une matière plastique frittée.

2. Dispositif de guidage selon la revendication 1,
**caractérisé en ce que**
l'élément de fixation comprend un dispositif de serrage, dans lequel le dispositif de serrage comprend un élément de serrage (101) avec lequel l'élément porteur (35) et l'élément de guidage de film (34) peuvent être maintenus ensemble de manière serrée.

3. Dispositif de guidage selon la revendication précédente,
**caractérisé en ce que**
l'élément de serrage (101) peut être actionné sans outil.

4. Dispositif de guidage selon l'une des revendications 2 ou 3,
**caractérisé en ce que**
l'élément de serrage (101) comprend une attache (90).

5. Dispositif de guidage selon l'une des revendications 2 à 4,
**caractérisé en ce que**
l'élément de serrage (101) comprend un levier de serrage à genouillère (81).

6. Dispositif de guidage selon l'une des revendications précédentes,
**caractérisé en ce que**
l'élément porteur (35) comprend au moins un crochet (86) ou au moins un rail dans lequel des pièces, plus particulièrement le bord de l'élément de guidage de film (34) peut être accroché ou inséré.

7. Dispositif de guidage selon l'une des revendications précédentes,
**caractérisé en ce que**
entre l'élément porteur (35) et l'élément de guidage de film (34) est disposé un élément d'étanchéité (55).

8. Dispositif de guidage selon la revendication précédente,
**caractérisé en ce que**
l'élément d'étanchéité (55) comprend un matériau compressible.

9. Dispositif de guidage selon l'une des revendications précédentes,
**caractérisé en ce que**
l'élément de guidage de film (34) comprend un bord circonférentiel (62) avec lequel il peut être appliqué contre l'élément porteur (35), dans lequel au moins des parties des zones de surface de l'élément de guidage de film (34) se trouvent à l'extérieur de la surface définie par le bord circonférentiel (62).

10. Dispositif de guidage selon la revendication précédente,
**caractérisé en ce que**
les zones de surfaces se trouvant à l'intérieur du bord sont formées sans arêtes et/ou sans angles.

11. Dispositif de guidage selon l'une des revendications précédentes,
**caractérisé en ce que**
la matière plastique comprend du polyéthylène.

12. Dispositif de guidage selon l'une des revendications précédentes, **caractérisé en ce que**
au moins un élément d'appui (37) est prévu, par l'intermédiaire duquel l'élément porteur peut être relié avec un mécanisme de réglage du dispositif de guidage,
au moins une fixation est prévue, avec laquelle l'élément porteur (35) et l'élément d'appui peuvent être fixés l'un à l'autre de manière amovible.

13. Dispositif de guidage selon la revendication précédente,
**caractérisé en ce que**
l'élément d'appui est conçu pour l'introduction d'un fluide et comprend plus particulièrement une pièce tubulaire.

14. Dispositif de guidage selon l'une des deux revendications précédentes,
**caractérisé en ce que**
la fixation est conçue comme une fermeture à baïonnette.

15. Installation de soufflage de film pour la fabrication d'un film de matière plastique,
avec une tête de soufflage pour l'extrusion du film de matière plastique et un dispositif de guidage
**caractérisée en ce que**
le dispositif de guidage est conçu selon l'une des revendications 1 à 14.

16. Procédé de guidage d'un film de matière plastique, dans lequel le film de matière plastique est guidé au moyen d'un coussin d'air, dans lequel plusieurs éléments de soufflage (31) sont utilisés dans un dispositif de guidage, dans lequel chaque élément de soufflage (31) comprend au moins un élément porteur (35) et au moins un élément de guidage de film (34)
• qui est au moins partiellement poreux, de préférence microporeux et
• qui est relié avec l'élément porteur (35),
**caractérisé en ce que**
au moins un élément de fixation est prévu, avec lequel l'élément porteur (35) et l'élément de guidage de film (34) sont fixés l'un à l'autre de manière amovible, dans lequel l'élément de guidage de film (34) est constitué au moins partiellement d'une matière plastique frittée.
